# EUROPÄISCHE PATENTANMELDUNG

(11) **EP 2 532 554 A1**
(43) Veröffentlichungstag der Anmeldung: **12.12.2012**
(21) Anmeldenummer: 12004174.4
(22) Anmeldetag: 31.05.2012
(51) Int. Cl.: B60R 5/04, B60R 9/06, B60R 9/10

(54) **Heckträger für einen Personenkraftwagen**

(30) Priorität: 08.06.2011 DE 102011103558
(71) Anmelder: WESTFALIA - Automotive GmbH, 33378 Rheda-Wiedenbrück (DE)
(72) Erfinder: Söffge, Friedhelm, 71229 Leonberg (DE)
(74) Vertreter: Bregenzer, Michael

(57) **Zusammenfassung**

Dieser Heckträger (17) ist für einen Personenkraftwagen konzipiert und zur Aufnahme von zu transportierenden Gegenständen ausgebildet, welcher Heckträger (17) mit einem Heck (6) eines einen Heckträgeraufnahmeraum (19) aufweisenden Aufbaus (2) des Personenkraftwagens zusammenarbeitet und von einer in den Heckträgeraufnahmeraum (19)versenkten Ruhestellung in eine über den Aufbau (2) hinausragende Transportstellung bewegbar ist und vice versa, wobei zwischen Heckträger (17) und Aufbau (2) eine Bewegungselementeeinrichtung (20) vorgesehen ist.

Um den Heckträger zu optimieren wird die Bewegungselementeeinrichtung (20) durch eine ein Drehachsensystem (21) aufweisende Lenkergliedervorrichtung (22) gebildet, die in der Ruhestellung im Wesentlichen vollständig in den Heckträgeraufnahmeraum (19) eingeschwenkt ist.

## Beschreibung

Die Erfindung bezieht sich auf einen Heckträger für einen Personenkraftwagen, der zur Aufnahme von zu transportierenden Gegenständen ausgebildet ist, nach dem Oberbegriff des Patentanspruchs 1.

Es ist ein ausziehbarer Lastenträger für ein Kraftfahrzeug bekannt, DE 102 31 963 B4, bei dem ein Lastenaufnehmer mittels eines Schienensystems in Fahrzeuglängsrichtung verschiebbar gelagert ist. Über eine Fixiereinrichtung ist der Lastenaufnehmer wahlweise in einer eingefahrenen Stellung und mindestens einer Betriebsstellung festlegbar. Der Lastenträger ist mit einer Ausziehmechanik verbunden. Letztere ist so gestaltet, dass bei Betätigung einer einen Bowdenzug umfassenden Entriegelungsmechanik für die Fixiereinrichtung, an der der Bowdenzug angreift, ein Auswerfer die Lastenaufnahme aus der eingefahrenen Stellung in die Betriebsstellung verfährt. Das Schienesystem umfasst beiderseits einer Mittellängsebene des Kraftfahrzeugs je eine Anbindungsschiene, welche Anbindungsschienen am Aufbau des Kraftfahrzeugs in Lage gehalten werden. Die sich innerhalb des Aufbaus erstreckenden Anbindungsschienen nehmen Tragschienen des Lastenträgers auf, und die Tragschienen sind in den Anbindungsschienen in Fahrzeuglängsrichtung bewegbar. Freie Enden der Tragschienen sind mit einer in Fahrzeugquerrichtung ausgerichteten Endplatte versehen, die in der eingefahrenen Stellung von einer korrespondierenden Öffnung in einer Außenhautwand des Aufbaus umgeben ist.

Aus der DE 77 14 592 U1 geht ein ausziehbarer Kofferraum im Heck eines Personenkraftwagens hervor, der in Fahrzeuglängsrichtung zwischen einer Ruhestellung und einer Betriebsstellung verschiebbar ist. Der Kofferraum ist nach Art einer Schublade ausgeführt, die in der Ruhestellung relativ weit in einen rückwärtigen Raum des Aufbaus hineinragt. Um den Kofferraum zwischen den Endstellungen zu bewegen, sind Endrollen vorgesehen, die mit entsprechenden Führungen zusammenarbeiten. Laufrollen und Führungen sind als Bewegungselemente ausgebildet.

Aufgabe der Erfindung ist es, einen Heckträger zur Aufnahme von zu transportierende Gegenständen für einen Personenkraftwagen zu gestalten, welcher Heckträger sich durch gute Funktion und in der Ruhestellung durch vertretbaren Raumanspruch im Bereich eines rückwärtigen Endes des Personenkraftwagens auszeichnet. Dabei sollte aber auch sichergestellt werden, dass die Umsetzung des Heckträgers im Aufbau des Personenkraftwagens und die Ausbildung der Bewegungselemente auf einfache Art und Weise möglich ist.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass der Heckträger dank der die Bewegungselemente bildenden Lenkgliedervorrichtung in der Ruhestellung mit geringem Raumanspruch in den Heckträgeraufnahmeraum vollständig eingeschwenkt ist, und zwar als kompakte Baueinheit. Dabei ist die Lenkgliedervorrichtung vorbildlich konstruiert, denn sie weist beiderseits der Mittellängsebene Lenkersysteme auf, die einerseits an ersten Lagerelementen und andererseits an zweiten Lagerelementen des ersten Abschlussquerträgers angeordnet sind. Hervorzuheben ist bei dieser Ausführung, dass das jeweilige erste Lenkersystem erste und zweite Lenker aufweist, die aneinander zugekehrten Enden über ein Lenkerlager in Wirkverbindung stehen und in der Transportstellung eine gestreckte Lage sowie in der Ruhestellung eine eingeschwenkte Lage einnehmen. Musterhaft ist in diesem Zusammenhang ist, dass die ersten Lenker an dem ersten Lagerelement und die zweiten Lenker unter Zwischenschaltung der zweiten Lagerelemente mit dem ersten Abschlussträger verbunden sind, wobei in der Ruhestellung des Heckträgers der ersten Lenker nach innen zur Mittellängsebene hin verstellt ist, wogegen der zweite Lenker mit einem Ende mit dem zweiten Lagerelement zur Fahrzeugaußenseite ausgerichtet ist. Maßstäbe setzt darüber hinaus das zweite Lenkersystem das eine Art Viergelenk darstellt und jeweils beiderseits der Mittellängsebene einen Lenker aufweist. Jeder

Lenker ist einerseits mit einem dritten Lagerelemente im Heckaufnahmeraum und andererseits mit einem vierten Lagerelemente des zweiten Abschlussträgers gekoppelt. Schließlich ist vorteilhaft, wenn beide Lenker zu beiden Seiten der Mittellängsebene mit Abkröpfungen versehen sind, dergestalt, dass in der Ruhestellung des Heckträgers, in der besagte Lenker in Fahrzeugquerrichtung ausgerichtet sind, erste und zweite Lenkerabschnitte der zuletzt genannten Lenker in etwa parallel zueinander verlaufen.

In der Zeichnung ist ein Ausführungsbeispiel der Erfindung dargestellt, das nachstehend näher erläutert wird.

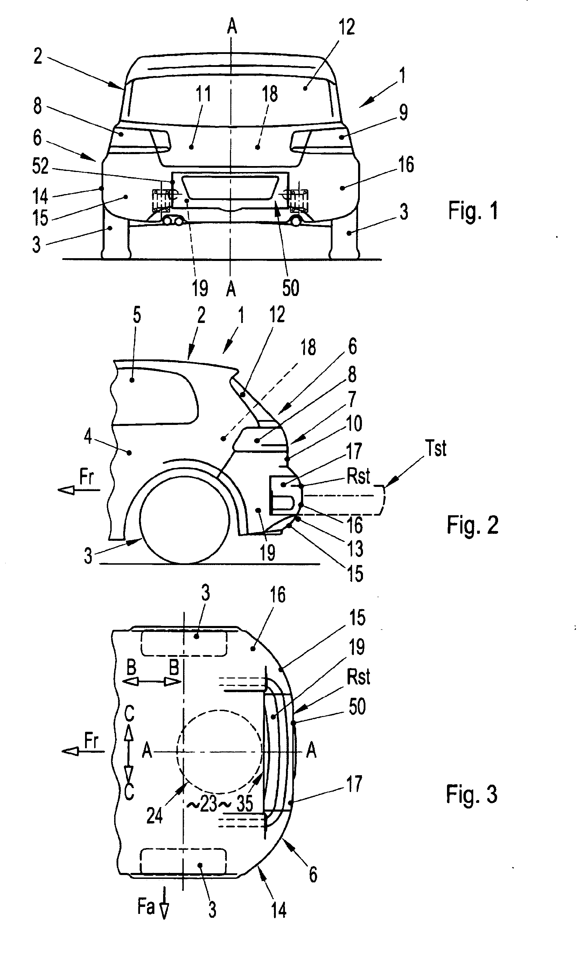

Es zeigen
Fig. 1 eine Ansicht von hinten auf einen Personenkraftwagen mit einem Heckträger,
Fig. 2 eine Teilseitenansicht des Personenkraftwagens im Bereich eines Hecks,
Fig. 3 eine Ansicht von oben auf die Fig. 2,
Fig. 4 eine Teilansicht der Fig. 3 mit einer ersten Ausführung des Heckträgers in einer Ruhestellung und in einer Transportstellung,
Fig. 5 eine Ansicht in Richtung X der Fig. 4,
Fig. 6 eine Ansicht entsprechend Fig. 4 mit einer zweiten Ausführung des Heckträgers,
Fig. 7 eine Ansicht in Richtung Y der Fig. 6.

Ein Personenkraftwagen 1 umfasst einen Aufbau 2, der von Rädern 3 getragen wird und Seitenwände 4 mit Seitenscheiben 5 sowie ein Heck 6 umfasst. Das Heck 6 ist als Steilheck 7 mit einer Rückleuchten 8 und 9 aufweisenden Rückwand 10 ausgeführt, die zumindest bereichsweise Bestandteil einer Heckklappe 11 ist; letztere trägt eine Heckscheibe 12. Die Rückwand 10 und ein unterer Rückwandabschnitt 13 sind Teil einer Außenhautwandstruktur 14 des Aufbaus 2, wobei der untere Rückwandabschnitt 13 bspw. abschnittsweise eine Verkleidung 15 eines Stoßfängers 16 bildet.

Im Heck 6 des Aufbaus 2 ist ein Heckträger 17 vorgesehen, der zur Aufnahme von zu transportierenden Gegenständen dient, also zusätzlich zu Gegenständen, die in einen über die Heckklappe 11 zugänglichen Stauraum 18 im Personenkraftwagen 1 unterbringbar sind. Der Heckträger 17 ist von einer in einen Heckträgeraufnahmeraum 19 versenkten Ruhestellung Rst in eine über den Aufbau 2 bzw., das Heck 6 entgegen der Fahrtrichtung Fr hinausragende Transportstellung Tst bewegbar und vice versa. Dazu ist zwischen Aufbau 2 und Heckträger 17 eine Bewegungselementeeinrichtung 20 wirksam.

Die Bewegungselementeeinrichtung 20 wird durch eine ein aufrechte Drehachsen besitzendes Drehachsensystem 21 aufweisende Lenkergliedervorrichtung 22 gebildet, die in der Ruhestellung Rst vollständig in den Heckträgeraufnahmeraum 19 eingeschwenkt ist, welcher Heckträgeraufnahmeraum 15 unterhalb des Stauraums 18 im Aufbau 2 ausgebildet ist. In Fahrtrichtung Fr betrachtet vor dem Heckträgeraufnahmeraum 19 ist ein Zusatzraum 23 vorgesehen, in dem ein Ersatzrad 24 unterbringbar ist. Das Ersatzrad 24 ist über den Stauraum 18 ein- und ausbaubar.

Die Lenkergliedervorrichtung 22 umfasst beiderseits einer Mittellängsebene A-A des Personenkraftwagens 1 Lenkersysteme 25 und 26, die einerseits an ersten Lagerelementen 27 sowie 28 im Heckträgeraufnahmeraum 19 und andererseits an zweiten Lagerelementen 29 sowie 30 eines ersten Abschlussquerträges 21 des Heckträgers 17 angeordnet sind. Ein erstes Lenkersystem 25 weist einen ersten Lenker 32 und einen zweiten Lenker 33 auf, die aneinander zugekehrten Enden El und Ell über ein Lenkerlager 34 zusammengesetzt sind, wobei die ersten und zweiten Lenker 32 und 33 in der Transportstellung Tst eine -in Fahrzeuglängsrichtung B-B betrachtet- gestreckte Lage und in der Ruhestellung Rst eine eingeschwenkte Lage einnehmen. Der erste Lenker 32 ist mit dem ersten Lagerelement 27 im Heckträgeraufnahmeraum 19 und der zweite Lenker 33 mit dem zweiten Lagerelement 29 des ersten Abschlussquerträges 31 verbunden. Aufgrund der Konstruktion und Lagerung der Lenker 32 und 33 ist in der Ruhestellung Rst der erste Lenker 32 mit seinem einen Ende El nach innen zur Mittellängsebene A-A hin verstellt und verläuft etwa parallel zu einer in Fahrzeugquerrichtung C-C ausgerichteten Querwand 35, die den Heckträgeraufnahmeraum 19 gegenüber dem das Ersatzrad 24 aufnehmenden Zusatzraum 23 trennt. Dagegen weist der zweite Lenker 33 mit dem an dem ersten Abschlussquerträger 31 gekoppelten Ende 36 zur Fahrzeugaußenseite Fa hin, derart, dass der zweite Lenker 33 möglichst nahe an den ersten Lenker 32 anschließt. Die Lenkersysteme 25 und 26 sind vorzugsweise in der Transportstellung Tst mit schematisch dargestellten Verriegelungen Vr1 und Vr2 fixierbar.

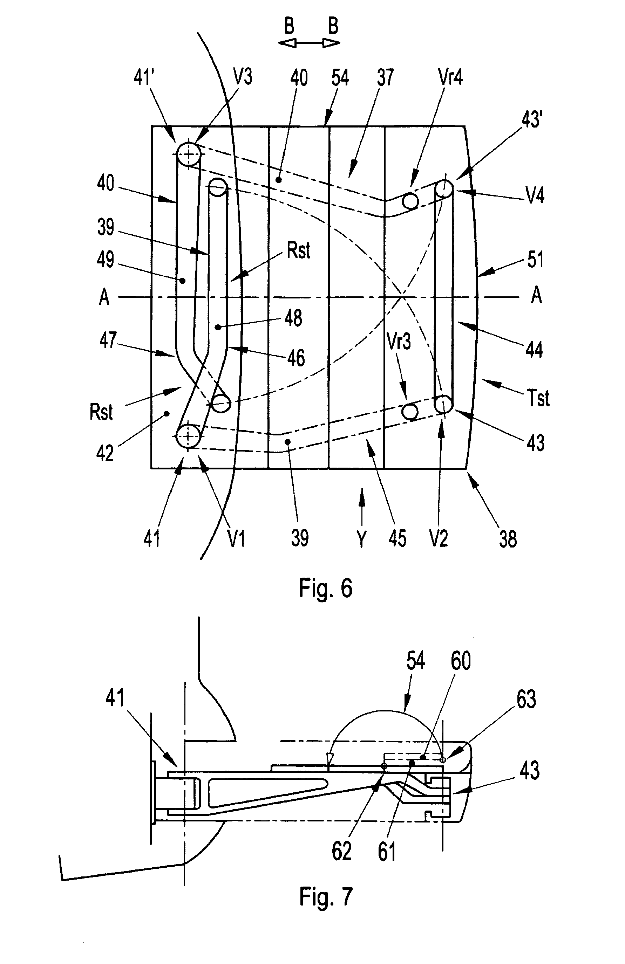

Ein zweites Lenkersystem 37 -Fig. 6 und 7- eines Heckträgers 38 verfügt beiderseits der Mittellängsebene A-A über jeweils einen einzigen Lenker 39 und 40. Der jeweilige Lenker z.B. 39 ist einerseits mit einem dritten Lagerelement 41 in einem Heckträgeraufnahmeraum 42 angelenkt und andererseits mit einem vierten Lagerelement 43 eines zweiten Abschlussquerträgers 44 gekoppelt. Die Lenker 39 und 40 bilden zusammen mit den dritten Lagerelementen 41 und 41' und den vierten Lagerelementen 43 und 43' ein Viergelenk 45 mit Gelenken V1, V2, V3 und V4. In der Transportstellung Tst erstrecken sich die Lenker 39 und 40 in Fahrzeuglängsrichtung B-B; in der Ruhestellung Rst verlaufen sie innerhalb des Heckträgeraufnahmeraums 42 in Fahrzeugquerrichtung C-C. Hierzu sind die Lenker 39 und 40 mit Abkröpfungen 46 und 47 versehen, die so ausgelegt sind, dass in der Ruhestellung Rst des Heckträgers 38 erste und zweite Lenkerabschnitte 48 und 49 in etwa parallel zueinander verlaufen. Um die Lenker 39 und 40 zumindest in der Transportstellung Tst festsetzen zu können, sind schematisierte Verriegelungen Vr3 und Vr4 vorgesehen.

Benachbart der ersten und zweiten Abschlussträger 31 und 44 sind Verkleidungselemente 50 und 51 vorgesehen, die in der Ruhestellung Rst in einer Ausnehmung 52 der Außenhautwandstruktur 12 des Aufbaus 2 oberflächenbündig ruhen.

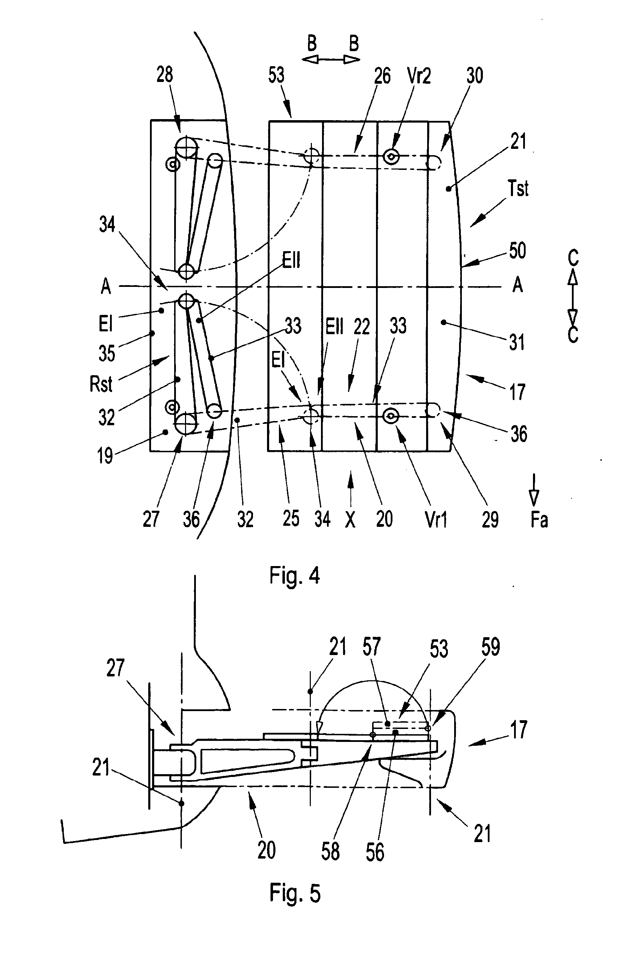

Schließlich sind das erste Lenkersystem 25 und 26 bzw. zweite Lenkersystem 37 der Heckträger 17 und 38 mit Vorkehrungen 53 -Fig. 5- und 54 -Fig. 7- zur Aufnahme einer Pritsche, eines Behälters, eines Fahrradträgers oder dgl. ausgebildet, welche Vorkehrungen 53 und 54 lediglich schematisch dargestellt sind. Die Vorkehrung 53 umfasst mehrer Auflageflächen .z.B. 56 und 57 -Fig. 5-, die um quer zur Fahrzeugquerrichtung C-C ausgerichtete Schwenkachsen 58 und 59 klappbar sind. Die Vorkehrung 54 besitzt gleichartige Auflageflächen 60, 61 -Fig. 7- mit Schwenkachsen 62 und 63.

## Patentansprüche

1. Heckträger für einen Personenkraftwagen, der zur Aufnahme von zu transportierenden Gegenständen ausgebildet ist, mit einem Heck eines einen Heckträgeraufnahmeraum aufweisenden Aufbaus des Personenkraftwagens zusammenarbeitet und von einer in den Heckträgeraufnahmeraum versenkten Ruhestellung in eine über den Aufbau hinausragende Transportstellung bewegbar ist und vice versa, wobei zwischen Heckträger und Aufbau eine Bewegungselementeeinrichtung vorgesehen ist, **dadurch gekennzeichnet, dass** die Bewegungselementeeinrichtung (20) durch eine ein Drehachsensystem (21) aufweisende Lenkergliedervorrichtung (22) gebildet wird, die in der Ruhestellung (Rst) im Wesentlichen vollständig in den Heckträgeraufnahmeraum (19) eingeschwenkt ist.

2. Heckträger nach Anspruch 1, **dadurch gekennzeichnet, dass** die Lenkergliedervorrichtung (22) beiderseits einer Mittellängsebene (A-A-) des Personenkraftagens (1) Lenkersysteme (25 und 26) umfasst, die einerseits an ersten Lagerelementen (27 und 28) im Heckträgeraufnahmeraum (19) und andererseits an zweiten Lagerelementen (30) eines ersten Abschlussquerträger (31) des Heckträgers (17) angeordnet sind.

3. Heckträger nach den Ansprüchen 1 und 2, **dadurch gekennzeichnet, dass** ein erstes Lenkersystem (25) beabstandet zu der Längsmittelebene (A-A) einen ersten Lenker (32) und einen zweiten Lenker (33) aufweist, die aneinander zugekehrten Enden (El und Ell) über ein Lenkerlager (34) zusammengesetzt sind und in der Transportstellung (Tst) eine gestreckte Lage und in der Ruhestellung (Rst) eine in den Heckträgeraufnahmeraum (19) eingeschwenkte Lage einnehmen.

4. Heckträger nach den Ansprüchen 2 und 3, **dadurch gekennzeichnet, dass** der erste Lenker (32) an einem ersten Lagerelement (27) und der zweite Lenker (33) unter Zwischenschaltung eines zweiten Lagerelements (29) mit dem ersten Abschlussquerträger (31) verbunden sind.

5. Heckträger nach den Ansprüchen 2 bis 4, **dadurch gekennzeichnet, dass** in der Ruhestellung (Rst) des Heckträgers (17) der erste Lenker (32) mit dem Ende (El) nach innen zur Mittellängsebene (A-A) hin verstellt ist, wobei der zweite Lenker (33) mit dem zweiten Lagerelement (29) zur Fahrzeugaußenseite (Fa) hinweist.

6. Heckträger nach Anspruch 1 und 2, **dadurch gekennzeichnet, dass** ein zweites Lenkersystem (37) beiderseits der Längsmittelebene (A-A) jeweils einen einzelnen Lenker (39 und 40) aufweist, der einerseits mit einem dritten Lagerelement (41; 41') im Heckträgeraufnahmeraum (42) und andererseits mit einem vierten Lagerelement (43: 43') eines zweiten Abschlussträgers (44) des Heckträgers (38) gekoppelt ist.

7. Heckträger nach Anspruch 6, **dadurch gekennzeichnet, dass** die Lenker (39 und 40) des zweiten Lenkersystems (37) zusammen mit den dritten Lagerelementen (41 und 41') und den vierten Lagerelementen (43 und 43') ein Viergelenk (45) bilden.

8. Heckträger nach den Ansprüchen 6 und 7, **dadurch gekennzeichnet, dass** die beiden Lenker mit Abkröpfungen versehen sind, dergestalt, dass in der Ruhestellung des Heckträgers erste und zweite Lenkerabschnitte der ersten und zweiten Lenker in Fahrzeugquerrichtung in etwa parallel zueinander verlaufen.

9. Heckträger nach einem oder mehreren der vorangehenden Ansprüche, **dadurch gekennzeichnet, dass** benachbart des Abschlussquerträgers (31 und 44) sich ein Verkleidungselement (50 und 51) erstreckt, das in der Ruhestellung (Rst) des Heckträgers (17 und 38) oberflächenbündig in eine angrenzende Außenhautwandstruktur (12) integriert ist.

10. Heckträger nach einem oder mehreren der vorangehenden Ansprüche, **dadurch gekennzeichnet, dass** die ersten und zweiten Lenkersysteme (25 und 26; 37) Vorkehrungen (52) zur Aufnahme einer Pritsche, eines Behälters, eines Fahrradträgers oder dgl. ausgebildet sind.
